(19) Europäisches Patentamt / European Patent Office / Office européen des brevets

(11) **EP 2 524 506 B1**

(12) **EUROPEAN PATENT SPECIFICATION**

(45) Date of publication and mention
of the grant of the patent:
**07.03.2018 Bulletin 2018/10**

(21) Application number: **11704111.1**

(22) Date of filing: **14.01.2011**

(51) Int Cl.:
*H04N 19/147* *(2014.01)*    *H04N 19/61* *(2014.01)*
*H04N 19/103* *(2014.01)*    *H04N 19/132* *(2014.01)*
*H04N 19/18* *(2014.01)*    *H04N 19/19* *(2014.01)*

(86) International application number:
**PCT/US2011/000064**

(87) International publication number:
**WO 2011/087908 (21.07.2011 Gazette 2011/29)**

(54) **VIDEO CODING USING COMPRESSIVE SENSING**

VIDEOKODIERUNG MIT KOMPRESSIVER ERFASSUNG

CODAGE VIDÉO UTILISANT L' ACQUISITION COMPRIMÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2010 US 295258 P**

(43) Date of publication of application:
**21.11.2012 Bulletin 2012/47**

(73) Proprietor: **Thomson Licensing DTV
92130 Issy-les-Moulineaux (FR)**

(72) Inventors:
• **DO, Thong
Beltsville
Maryland 20705 (US)**
• **LU, Xiaoan
Princeton
New Jersey 08540 (US)**
• **SOLE, Joel
La Jolla
California 92037 (US)**

(74) Representative: **Hofstetter, Schurack & Partner
Patent- und Rechtsanwaltskanzlei
PartG mbB
Balanstrasse 57
81541 München (DE)**

(56) References cited:
**EP-A1- 2 046 045**

• **JING ZHENG ET AL: "The application of
Compressive Sensing technique on a stationary
surveillance camera system", PROCEEDINGS OF
SPIE. INFRARED IMAGING SYSTEMS: DESIGN,
ANALYSIS, MODELING, AND TESTING XIX, vol.
6941, 69410H, 18 March 2008 (2008-03-18), pages
1-8, XP055000396, ISSN: 0277-786X, DOI:
10.1117/12.779321**
• **JING ZHENG ET AL: "Video compressive sensing
using spatial domain sparsity", OPTICAL
ENGINEERING, vol. 48, no. 8, 087006, 21 August
2009 (2009-08-21), pages 1-10, XP055000305,
ISSN: 0091-3286, DOI: 10.1117/1.3206733**
• **NA FAN: "Wavelet-based compressive
Super-Resolution", WORKSHOP ON
APPLICATIONS OF COMPUTER VISION (WACV),
2009, 7 December 2009 (2009-12-07), pages 1-6,
XP031622330, IEEE, PISCATAWAY, NJ, USA
ISBN: 978-1-4244-5497-6**

**Description**

CROSS-REFERENCE TO RELATED APPLICATIONS

This application claims the benefit of U.S. Provisional Application Serial No. 61/295,258, filed January 15, 2010.

TECHNICAL FIELD

The present principles relate generally to video encoding and decoding and, more particularly, to methods and apparatus for video encoders and decoders using compressive sensing.

BACKGROUND

Compressive sensing (also referred to as compressive sampling and compressed sensing) is a technique for acquiring and reconstructing a signal in consideration of the prior knowledge that the signal is sparse or compressible. Using the theory of compressive sensing, a signal can be sampled at a greatly lower rate than Nyquist sampling. Compressive sensing is used in various applications, including data compression, Magnetic Resonance Imaging (MRI), and so forth. In the literature, compressive sensing was integrated into the video compression framework to improve the residue coding. Since the residue is often not very sparse, the improvement has been limited.

Overview of a Compressive Sensing (CS)Framework

Supposing $\mathbf{x}$ is a length-$N$ signal, $\mathbf{x}$ is said to be $K$-sparse (or compressible) if $\mathbf{x}$ can be well approximated using $K<<N$ coefficients under some linear transform $\Psi$ (e.g., the discrete cosine transform (DCT) or the discrete wavelet transform (DWT)) as follows:

$$\mathbf{x} = \Psi\alpha, \qquad\qquad (1)$$

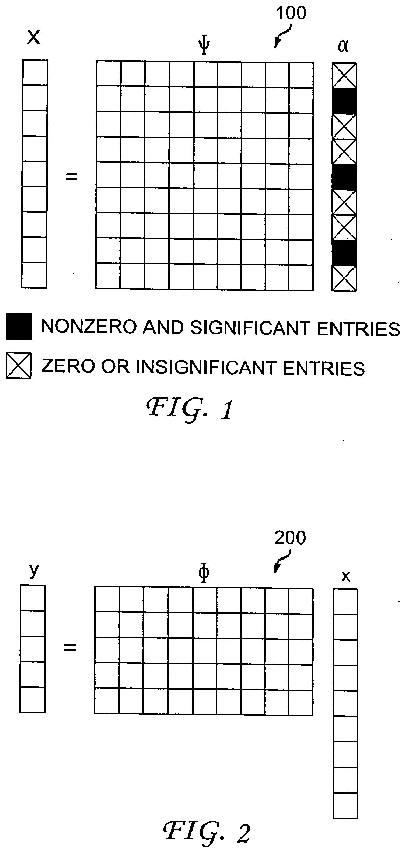

where $\Psi$ is the sparsifying transform, $\alpha$ is the transform coefficient vector, and only $K$ coefficients in $\alpha$ are non-zeroes. Turning to FIG. 1, a representation of a sparse signal is indicated generally by the reference numeral 100. The representation 100 involves a length-$N$ signal $\mathbf{x}$, a sparsifying transform $\Psi$, and a transform coefficient vector $\alpha$.
According to compressive sensing theory, such a signal can be acquired through incoherent linear projection as follows:

$$\mathbf{y} = \Phi\mathbf{x}, \qquad\qquad (2)$$

where $\mathbf{y}$ is a measurement vector with $M$ entries, and $\Phi$ represents an $M{\times}N$ incoherent sensing matrix, where M<<N. Turning to FIG. 2, a method for measurement acquisition in compressive sensing is indicated generally by the reference numeral 200. The method 200 involves a length-$N$ signal $\mathbf{x}$, a measurement vector with $M$ entries $\mathbf{y}$, and an $M{\times}N$ incoherent sensing matrix $\Phi$.
The compressive sensing framework asserts that $\mathbf{x}$ can be faithfully recovered from only $M \geq cK \log N$ (c is a small constant) measurements by solving the following optimization problem:

$$\alpha^* = \arg\min\ |\alpha|_1\ \text{ such that }\ \mathbf{y}\ =\ \Phi\mathbf{x} = \Phi\Psi\alpha, \qquad\qquad (3)$$

where the input signal can be approximated by $\mathbf{x}^* = \Psi\alpha^*$. In Equation (3), the measurement vector $\mathbf{y,}$ the sensing matrix $\Phi$ and the sparsifying matrix $\Psi$ are known. However, the signal $\mathbf{x}$ and its transform coefficient vector $\alpha$ are unknown (to be sought). In such a case, $\alpha$ is the optimization variable.
Note that as M<<N, Equation (2) is underdetermined, i.e., there are many candidate signals $\mathbf{x}$ that all satisfy Equation (2). Thus, the conventional approach, which employs a least-square solution, namely, $\mathbf{x'} = \Phi^T (\Phi\Phi^T)^{-1}\mathbf{y}$, cannot provide a faithful approximation of $\mathbf{x}$. The compressive sensing theory proposes an alternative approach to identify the correct solution signal $\mathbf{x}$ by solving Equation (3). Intuitively, the optimization problem in Equation (3) attempts to find the candidate $\mathbf{x}$ that has the fewest number of nonzero entries in the transform domain $\Psi$.
One of the most popular incoherent sensing matrices $\Phi$ in the literature is a random projection or a random matrix, where each entry includes independent, identical distributed random variables (for example, each entry has a Gaussian or Bernoulli distribution). It can be shown that such a random matrix is optimally incoherent with sparsifying $\Psi$ and, thus, leads to optimal performance.

Note that the objective function in Equation (3) can be replaced by other sparsity measures. For example, with 2-dimensional signals such as images (or image blocks), it is common to employ Total Variation (TV) as a sparsity measure. Total Variation is a function of the difference between consecutive pixels. An example of Total Variation is as follows:

$$TV(x) = \sum_{i,j} \sqrt{(x_{i+1,j} - x_{i,j})^2 + (x_{i,j+1} - x_{i,j})^2} = \sum_{i,j} \sqrt{D_j(i,j)^2 + D_v(i,j)^2} \quad (4)$$

which is the sum of magnitude of the horizontal discrete gradient $D_h$ and vertical discrete gradient $D_v$ at every pixel. A smooth image block with little texture often has a small Total Variation. In other words, such an image block is often sparse in the gradient domain.

Related Work

In a first prior art approach, a video codec was proposed that encoded a subset of DCT transform coefficients of the block residue and employed a sparse signal recovery algorithm to recover the block residue from the coded coefficients. The sparse signal recovery is obtained through a TV-minimization. The optimization problem in Equation (3) becomes the following:

$$\mathbf{x}^* = \arg\min TV(\mathbf{x}) \text{ such that } \mathbf{y} = \Phi\mathbf{x}, \qquad (5)$$

where $\mathbf{x}$ is the residue data, i.e., the result of subtracting the prediction data from the original data. Basically, the approach tries to minimize the gradient of the reconstructed residue under the constraint of the observed data $\mathbf{y}$. Since a quantization process is involved, perfect reconstruction is not possible in principle (i.e., the equality constraint in $\mathbf{y} = \Phi\mathbf{x}$ is too restrictive), so the algorithm allows for some margin of error (denoted by $\varepsilon$ in Equation (6)), by solving the following problem:

$$\mathbf{x}^* = \arg\min TV(\mathbf{x}) \text{ such that } \|\mathbf{y} - \Phi\mathbf{x}\| < \varepsilon. \qquad (6)$$

There are a few critical disadvantages in this approach, explained as follows. The decoder in the aforementioned first prior art approach employs a TV-minimization based algorithm to reconstruct the block residue. This approach works well assuming the block residue is sparse in the gradient domain. However, the block residue is often not sparse in the gradient domain after block prediction, and this assumption is not compatible with the directional intra prediction which has already exploited the spatial redundancy.

One-dimensional DCT coefficients are calculated for the block residue in the first prior art approach before such coefficients are truncated. This truncation or sampling pattern does not optimally capture the energy of the block residue, therefore reducing the coding efficiency of the encoder. Further, the sparse recovery algorithm employed in the first prior art approach does not fully take into account the quantization effect of coded coefficients, leading to a quality degradation of the reconstructed block. Moreover, the implementation in the first prior art approach employs a suboptimal $l_1$-minimization algorithm. Thus, the resulting encoder is too slow to be used for practical applications.

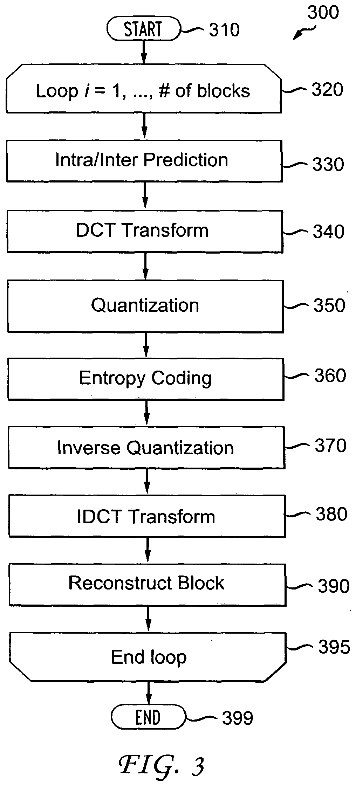

Turning to FIG. 3, a method for encoding image data for a picture is indicated generally by the reference numeral 300. The method 300 includes a start block 310 that passes control to a loop limit block 320. The loop limit block 320 begins a loop using a variable i having a range from 1, ..., number (#) of blocks in the picture, and passes control to a function block 330. The function block 330 performs intra/inter prediction to obtain a prediction for a current block, and passes control to a function block 340. The function block 340 applies a DCT transform to a residue (representing a difference between an original version of the current block and the prediction for the current block) to obtain transform coefficients there for, and passes control to a function block 350. The function block 350 quantizes the transform coefficients to obtain quantized transform coefficients, and the passes control to a function block 360. The function block 360 entropy codes the quantized transform coefficients, and passes control to a function block 370. The function block 370 inverse quantizes the quantized transform coefficients, and passes control to a function block 380. The function block 380 inverse transforms (using, e.g., a discrete cosine transform (DCT)) the inverse quantized transform coefficients to obtain a reconstructed residue for the current block, and passes control to a function block 390. The function block 390 reconstructs the current block by adding the reconstructed residue for the current block to the prediction for the current block, and passes control to a loop limit block 395. The loop limit block 395 ends the loop, and passes control to an end block 399.

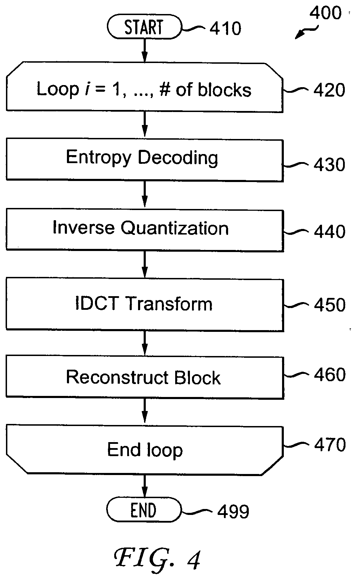

Turning to FIG. 4, a method for decoding image data for a picture is indicated generally by the reference numeral 400. The method 400 includes a start block 410 that passes control to a loop limit block 420. The loop limit block 420 begins a loop using a variable *i* having a range from 1, ...., number (#) of blocks in the picture, and passes control to a function block 430. The function block 430 performs entropy decoding to obtain the quantized transform coefficients, the intra/inter prediction modes and other information, and passes control to a function block 440. The function block 440 inverse quantizes the quantized transform coefficients of the current block, and passes control to a function block 450. The function block 450 inverse transforms (using, e.g., a discrete cosine transform (DCT)) the inverse quantized transform coefficients to obtain a reconstructed residue, and passes control to a function 460. The function block 460 reconstructs the current block by adding the reconstructed residue for the current block to the prediction for the current block, and passes control to a loop limit bloc 470. The loop limit block 470 ends the loop, and passes control to an end block 499.

Document EP 2 046 045 A1 discloses a method for coding a block of image data. The method comprises transforming a block of image data into a block of transformed data, quantizing the block of transformed data, sampling the block of quantized data into a block of less data using a predefined sampling pattern, and coding the sampled data.

Furthermore, the article NA FAN: "Wavelet-based compressive Super-Resolution", APPLICATONS OF COMPUTER VISION (WACV), 2009 WORKSHOP ON, IEEE, PISCATAWAY, NJ, USA, 7 December 2009 (2009-12-07), pages 1-6, XP031622330, ISBN: 978-1-4244-5497-6 discloses a wavelet based compressive sampling super resolution algorithm. It defines an objective energy function to evaluate a vector's fitness for a sparsity assumption. The energy function defines a weight that balances the importance of the sparsity of the vector and the conformance of a recovered signal to a low resolution signal.

SUMMARY

These and other drawbacks and disadvantages of the prior art are addressed by the present principles, which are directed to methods and apparatus for video encoders and decoders using compressive sensing according to claims 1, 2, 10 and 11.

Further a computer readable storage media according to claim 16 is provided.

Favourable further developments of the present invention are set out in the subclaims.

These and other aspects, features and advantages of the present principles will become apparent from the following detailed description of exemplary embodiments, which is to be read in connection with the accompanying drawings.

BRIEF DESCRIPTION OF THE DRAWINGS

The present principles may be better understood in accordance with the following exemplary figures, in which:

FIG. 1 is a diagram showing a representation of a sparse signal to which the present principles may be applied;
FIG. 2 is a diagram showing a method for measurement acquisition in compressive sensing in accordance with the prior art;
FIG. 3 is a flow diagram showing a method for encoding image data for a picture in accordance with the prior art;
FIG. 4 is a flow diagram showing a method for decoding image data for a picture in accordance with the prior art;
FIG. 5 is a block diagram showing an exemplary video encoder to which the present principles may be applied, in accordance with an embodiment of the present principles;
FIG. 6 is a block diagram showing an exemplary video decoder to which the present principles may be applied, in accordance with an embodiment of the present principles;
FIG. 7 is a flow diagram showing an exemplary method for block reconstruction, in accordance with an embodiment of the present principles;
FIG. 8 is a flow diagram showing an exemplary method for quantization noise compensation involving adaptively adjusting a weighting factor, in accordance with an embodiment of the present principles;
FIG. 9 is a flow diagram showing an exemplary method for encoding image data for a picture, in accordance with an embodiment of the present principles; and
FIG. 10 is a flow diagram showing an exemplary method for decoding image data for a picture, in accordance with an embodiment of the present principles.

DETAILED DESCRIPTION

The present principles are directed to methods and apparatus for video encoders and decoders using compressive sensing.

The present description illustrates the present principles. It will thus be appreciated that those skilled in the art will be able to devise various arrangements that, although not explicitly described or shown herein, embody the present principles. All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Also, as used herein, the words "picture" and "image" are used interchangeably and refer to a still image or a picture from a video sequence. As is known, a picture may be a frame or a field.

Moreover, we note the following. Herein, we used the phrase "measurement vector" to generally refer to a subset of transform coefficients. For example, in an embodiment, we use the following Equation, which is Equation (4) hereinafter, namely $y=A(x)$, where $y$ is the measurement vector, $A(.)$ is an operator, and $x$ is the signal. In our example, in the operation $A(.)$, the transform coefficients are generated by transforming $x$, the transform coefficients are scanned in zigzag order and the first coefficients are selected as the subset. This subset of transform coefficients is put into a vector that is referred to as a measurement vector. Thus, as used herein, the phrase 'transform coefficients relating to the image block", when used with respect to a measurement vector generated for the image block as described more fully hereinafter, refers to a subset of transform coefficients for a residue of the image block and/or a subset of transform coefficients for a prediction of the image block. We note that the subset of transform coefficients for the residue and the subset of transform coefficients for the prediction are combined to obtain a measurement vector for the image block (see, e.g., Equation (9) hereinafter).

In an embodiment, we address how to reconstruct an image block x when the following are known: (1) a subset of residue coefficients $A(x_{res})$; and (2) the predicted block ($x_{pred}$). Intuitively, we can loop over all possible values of x to find the particular value that minimizes the sparsity of x given the constraint $A(x)$ should be close to the received information, we the constraint $A(x)$ is also referred to herein as an "estimated measurement". The received information is $y = A(x_{res}) + A(x_{pred})$), which is also referred to herein as a "reconstructed measurement". This problem is formulated in Equation (8) hereinafter with a weighting factor $\mu$.

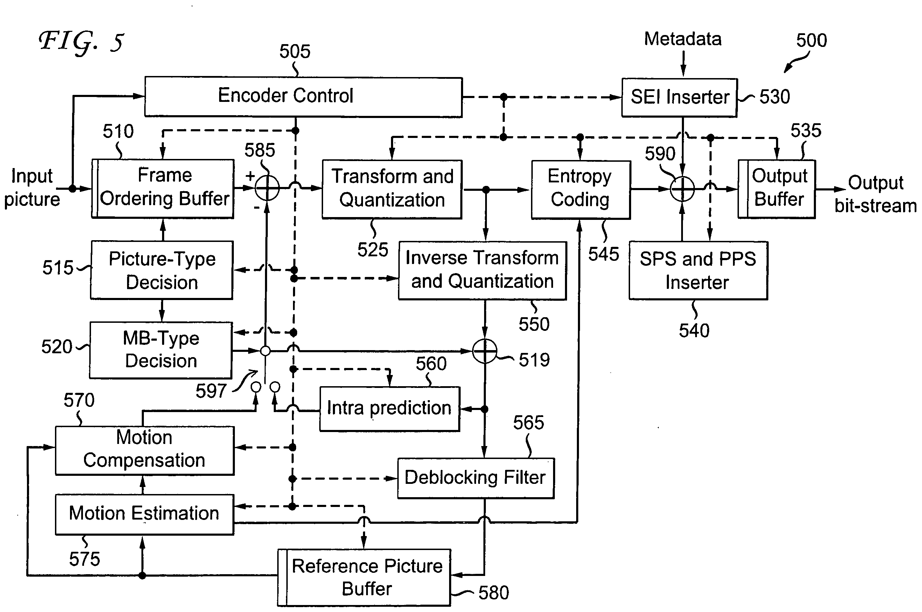

Turning to FIG. 5, an exemplary video encoder to which the present principles may be applied is indicated generally by the reference numeral 500. The video encoder 500 includes a frame ordering buffer 510 having an output in signal communication with a non-inverting input of a combiner 585. An output of the combiner 585 is connected in signal communication with a first input of a transformer and quantizer 525. An output of the transformer and quantizer 525 is connected in signal communication with a first input of an entropy coder 545 and a first input of an inverse transformer and inverse quantizer 550. An output of the entropy coder 545 is connected in signal communication with a first non-inverting input of a combiner 590. An output of the combiner 590 is connected in signal communication with a first input of an output buffer 535.

A first output of an encoder controller 505 is connected in signal communication with a second input of the frame ordering buffer 510, a second input of the inverse transformer and inverse quantizer 550, an input of a picture-type decision module 515, a first input of a macroblock-type (MB-type) decision module 520, a second input of an intra prediction module 560, a second input of a deblocking filter 565, a first input of a motion compensator 570, a first input of a motion estimator 575, and a second input of a reference picture buffer 580.

A second output of the encoder controller 505 is connected in signal communication with a first input of a Supplemental Enhancement Information (SEI) inserter 530, a second input of the transformer and quantizer 525, a second input of the entropy coder 545, a second input of the output buffer 535, and an input of the Sequence Parameter Set (SPS) and Picture Parameter Set (PPS) inserter 540.

An output of the SEI inserter 530 is connected in signal communication with a second non-inverting input of the combiner 590.

A first output of the picture-type decision module 515 is connected in signal communication with a third input of the frame ordering buffer 510. A second output of the picture-type decision module 515 is connected in signal communication with a second input of a macroblock-type decision module 520.

An output of the Sequence Parameter Set (SPS) and Picture Parameter Set (PPS) inserter 540 is connected in signal communication with a third non-inverting input of the combiner 590.

An output of the inverse quantizer and inverse transformer 550 is connected in signal communication with a first non-inverting input of a combiner 519. An output of the combiner 519 is connected in signal communication with a first input of the intra prediction module 560 and a first input of the deblocking filter 565. An output of the deblocking filter 565 is connected in signal communication with a first input of a reference picture buffer 580. An output of the reference picture buffer 580 is connected in signal communication with a second input of the motion estimator 575 and a third input of the motion compensator 570. A first output of the motion estimator 575 is connected in signal communication with a second input of the motion compensator 570. A second output of the motion estimator 575 is connected in signal communication with a third input of the entropy coder 545.

An output of the motion compensator 570 is connected in signal communication with a first input of a switch 597. An output of the intra prediction module 560 is connected in signal communication with a second input of the switch 597. An output of the macroblock-type decision module 520 is connected in signal communication with a third input of the switch 597. The third input of the switch 597 determines whether or not the "data" input of the switch (as compared to the control input, i.e., the third input) is to be provided by the motion compensator 570 or the intra prediction module 560. The output of the switch 597 is connected in signal communication with a second non-inverting input of the combiner 519 and an inverting input of the combiner 585.

A first input of the frame ordering buffer 510 and an input of the encoder controller 505 are available as inputs of the encoder 500, for receiving an input picture. Moreover, a second input of the Supplemental Enhancement Information (SEI) inserter 530 is available as an input of the encoder 500, for receiving metadata. An output of the output buffer 535 is available as an output of the encoder 500, for outputting a bitstream.

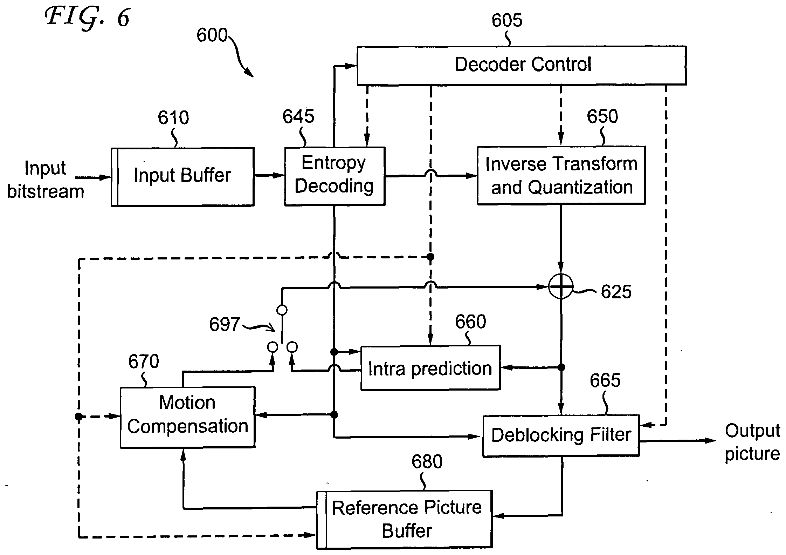

Turning to FIG. 6, an exemplary video decoder to which the present principles may be applied is indicated generally by the reference numeral 600. The video decoder 600 includes an input buffer 610 having an output connected in signal communication with a first input of an entropy decoder 645. A first output of the entropy decoder 645 is connected in signal communication with a first input of an inverse transformer and inverse quantizer 650. An output of the inverse transformer and inverse quantizer 650 is connected in signal communication with a second non-inverting input of a combiner 625. An output of the combiner 625 is connected in signal communication with a second input of a deblocking filter 665 and a first input of an intra prediction module 660. A second output of the deblocking filter 665 is connected in signal communication with a first input of a reference picture buffer 680. An output of the reference picture buffer 680 is connected in signal communication with a second input of a motion compensator 670.

A second output of the entropy decoder 645 is connected in signal communication with a third input of the motion compensator 670, a first input of the deblocking filter 665, and a third input of the intra predictor 660. A third output of the entropy decoder 645 is connected in signal communication with an input of a decoder controller 605. A first output of the decoder controller 605 is connected in signal communication with a second input of the entropy decoder 645. A second output of the decoder controller 605 is connected in signal communication with a second input of the inverse transformer and inverse quantizer 650. A third output of the decoder controller 605 is connected in signal communication with a third input of the deblocking filter 665. A fourth output of the decoder controller 605 is connected in signal communication with a second input of the intra prediction module 660, a first input of the motion compensator 670, and a second input of the reference picture buffer 680.

An output of the motion compensator 670 is connected in signal communication with a first input of a switch 697. An output of the intra prediction module 660 is connected in signal communication with a second input of the switch 697. An output of the switch 697 is connected in signal communication with a first non-inverting input of the combiner 625.

An input of the input buffer 610 is available as an input of the decoder 600, for receiving an input bitstream. A first output of the deblocking filter 665 is available as an output of the decoder 600, for outputting an output picture.

Due to the quantization step, there is quantization noise in the final reconstructed block. That is, we have recognized that in current state-of-the-art video encoders and decoders (e.g., those pertaining to the International Organization for Standardization/International Electrotechnical Commission (ISO/IEC) Moving Picture Experts Group-4 (MPEG-4) Part 10 Advanced Video Coding (AVC) Standard/International Telecommunication Union, Telecommunication Sector (ITU-T) H.264 Recommendation (hereinafter the "MPEG-4 AVC Standard"), the ISO/IEC MPEG-2 Standard, and so forth), quantization noise generates more performance loss when the quantization parameter gets coarser. Such quantization noise results from the quantization and de-quantization of the transform coefficients of a block residue.

In accordance with the present principles, we propose methods and apparatus to mitigate the effects of quantization noise. In an embodiment, the present principles provide a nonlinear reconstruction method to mitigate the quantization noise. The proposed reconstruction can be partially regarded as a de-noising method. In addition, the present principles also provide a new compressive sensing coding method that encodes only a subset of transform coefficients to reduce the bit rate. The new nonlinear reconstruction method is employed to both compensate for the quantization noise and to recover the truncated transform coefficients.

Our proposed approach attempts to address the above described limitations of the prior art and, hence, yield a solution with higher coding efficiency as well as a faster implementation.

Herein, we propose a new method to encode transform coefficients and a new reconstruction algorithm to recover an image block. We introduce a new coding mode (namely, compressive sensing mode or CS mode) based on the compressive sensing theory. In this mode, we encode only a subset of transform coefficients and employ a sparse signal recovery algorithm to recover the block from the coded coefficients. The encoder selects between the existing coding modes and the proposed CS mode to encode the block residue.

A NOVEL CS CODING MODE OF ENCODING THE BLOCK RESIDUE

If we follow the regular practice in the compressive sensing framework, a random subset selection of the transform coefficients or a random projection is optimal for an incoherence guarantee. However, these sensing matrices do not yield good performance in the compression application. This can be justified as follows. The performance criteria in the compressive sensing framework and in image compression are quite different. While the former is about the number of measurements over a given quality of a reconstructed signal (PSNR), the latter is about the amount of coding bits over a given quality of a reconstructed signal. It is to be noted that the amount of coding bits depends not only on the number of coded measurements but also on the statistical distribution of these measurements. Therefore, a good sensing operator with respect to the image compression application must yield measurements that are both incoherent and highly compressible. Although the random projection yields a high incoherence, its measurements tend to be Gaussian distributed which is difficult to compress. Thus, random projection is inefficient for compression applications.

We do not employ a random projection or encode all of the transform coefficients of the block residue. Instead, we propose to encode only a subset of transform coefficients and disregard the remaining transform coefficients. In one embodiment, the transform coefficients are scanned in a zigzag order and the first coefficients are selected as the subset. This subset of transform coefficients is put into a vector that is referred to as a measurement vector of the block residue. The measurement acquisition is mathematically represented as follows:

$$\mathbf{y}_{res} = \mathbf{A}(\mathbf{x}_{res}), \qquad\qquad (7)$$

where $\mathbf{x}_{res}$ denotes the block residue, $\mathbf{y}_{res}$ denotes a vector that includes a subset of transform coefficients of the block residue, and A represents an operator that transforms the block residue (via, e.g., the 2-D DCT transform or the integer MPEG-4 AVC Standard transform) and then selects a subset of first entries with respect to the zigzag scanning order.

This sensing operator A is designed to (i) maximally capture the energy of the block residue and (ii) be consistent with the current MPEG-4 AVC Standard integer transform for simple integration. Our proposed sensing method yields a good balance between incoherence and compressibility, leading to higher compression performance.

A NOVEL METHOD OF BLOCK RECONSTRUCTION

To reconstruct the image blocks, we employ the TV-minimization block reconstruction in the pixel domain that can be adjusted adaptively with quantization parameters. It is to be appreciated that the constrained optimization relating to Equations (4) or (5) is equivalent to the following unconstrained optimization:

$$\mathbf{x}^* = \arg\min \{TV(\mathbf{x}) + \mu|\mathbf{y}-A(\mathbf{x})|^2\}, \tag{8}$$

where $\mu$ is some positive real number that is often referred as the TV-weighting coefficient. We adopt this unconstrained optimization approach because it often can be solved much faster than the constrained version. In addition, the adaptive TV-weighting coefficient $\mu$ is employed to compensate for the quantization noise.

A novel method of block reconstruction of a current block being reconstructed, given the predicted block (for the current block) and the measurement vector of the block residue $\mathbf{y}_{res}$ of the current block, (where the measurement vector of the block residue $\mathbf{y}_{res}$ of the current block includes a subset of the transform coefficients of the block residue $\mathbf{y}_{res}$) is proposed as follows.

Step 1: Generate a measurement vector of the predicted block that includes a subset of the significant transform coefficients of the predicted block, denoted as $\mathbf{y}_{pred}$:

$$\mathbf{y}_{pred} = A(\mathbf{x}_{pred}) \tag{9}$$

Step 2: Generate a measurement vector of the (intermediate) reconstructed block by adding the measurement vector of the block residue to the measurement vector of the predicted block:

$$\mathbf{y} = \mathbf{y}_{res} + \mathbf{y}_{pred} \tag{10}$$

Step 3: Solve the following optimization for a final reconstructed block as follows:

$$\mathbf{x}_{rec} = Min \{\Psi(\mathbf{x}) + \mu^*|\mathbf{y}-A(\mathbf{x})|^2\} \tag{11}$$

where $\mathbf{x}_{rec}$ is the final reconstructed block, $\Psi$ is an operator on $\mathbf{x}$, and $\mu$ is a weighting factor. $\Psi$ can be any operator, but the algorithm works when $\Psi$ maps to a space where the signal is sparse. In this regard, Total Variation (TV) is a good example, since many blocks in a picture are sparse in the gradient domain. The optimization variable is $\mathbf{x}$.

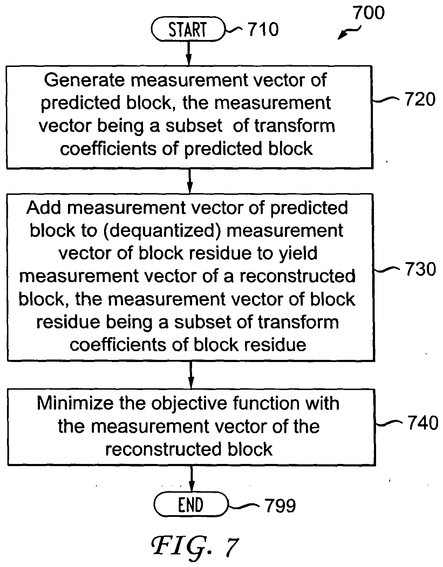

Turning to FIG. 7, an exemplary method for block reconstruction is indicated generally by the reference numeral 700. The method 700 includes a start block 710 that passes control to a function block 720. The function block 720 generates a measurement vector of a predicted block, the measurement vector being a subset of the transform coefficients of the predicted block, and passes control to a function block 730. The function block 730 adds the measurement vector of the predicted block to the (dequantized) measurement vector of the block residue to yield a measurement vector of a reconstructed block, the measurement vector of the block residue being a subset of the transform coefficients of the block residue and passes control to a function block 740. The function block 740 minimizes the objective function with the measurement vector of the reconstructed block, and passes control to an end block 799.

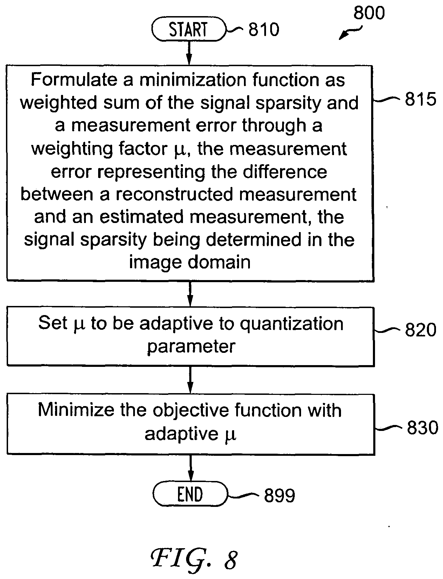

Quantization noise is introduced when the measurement vector of the block residue $\mathbf{y}_{res}$ is quantized (and then dequantized for reconstruction). To compensate for this quantization noise, the factor $\mu$ is adjusted adaptively with respect to the quantization step size as illustrated in FIG. 8. Turning to FIG. 8, an exemplary method for quantization noise compensation involving adaptively adjusting a weighting factor is indicated generally by the reference numeral 800. The method 800 includes a start block 810 that passes control to a function block 815. The function block 815 formulates a minimization function as a weighted sum of the signal sparsity and a measurement error through a weighting factor $\mu$, the measurement error representing a difference between a reconstructed measurement and an estimated measurement, the signal sparsity being determined in the image domain, and passes control to a function block 820. The function block 820 sets a weighting factor $\mu$ to be adaptive to a quantization parameter, and passes control to a function block 830. The function block 830 minimizes the objective function with the adaptive weighting factor $\mu$, and passes control to an end block 899.

NOVEL VIDEO ENCODING AND VIDEO DECODING

The present principles incorporate the new compressive sensing coding mode and the new block reconstruction algorithm to existing video encoders and decoders (e.g., the MPEG-4 AVC Standard, the MPEG-2 Standard, and so forth). A video encoder to which the present principles can be applied is shown and described with respect to FIG. 5, while a video decoder to which the present principles can be applied is shown and described with respect to FIG. 6.

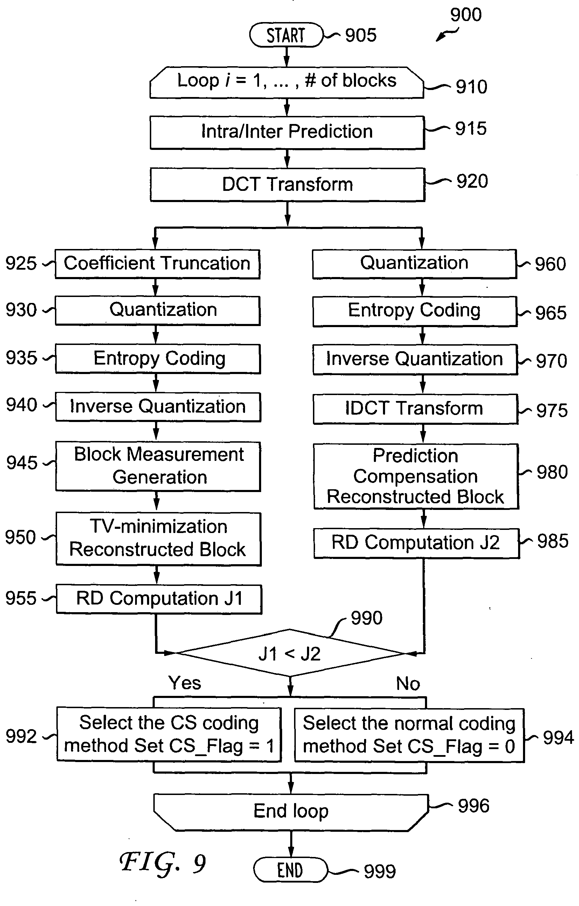

Turning to FIG. 9, an exemplary method for encoding image data for a picture is indicated generally by the reference numeral 900. The method 900 advantageously incorporates a novel compressive sensing mode and a novel block reconstruction in accordance with the present principles. The method 900 includes a start block 905 that passes control to a loop limit block 910. The loop limit block 910 begins a loop using a variable i having a range equal to 1, ..., number (#) of blocks, and passes control to a function block 915. The function block 915 performs intra/inter prediction, and passes control to a function block 920. The function block 920 applies a DCT transform to a residue to obtain the transform coefficients, and passes control to a function block 925. The function block 925 performs coefficient truncation to obtain the measurement vector (by keeping only a subset of the transform coefficients), and passes control to a function block 930. The function block 930 quantizes the (truncated) transform coefficients, and passes control to a function block 935. The function block 935 entropy codes the quantized transform coefficients, and passes control to a function block 940. The function block 940 inverse quantizes the quantized transform coefficients, and passes control to a function block 945. The function block 945 performs block measurement generation, for example using the method 700 in FIG. 7, and passes control to a function block 950. The function block 950 obtains a TV-minimum reconstructed block by solving the optimization problem described in Equation (8), and passes control to a function block 955. The function block 955 performs a rate-distortion computation to obtain a rate-distortion value J1, and passes control to a decision block 990. The decision block 990 determines whether or not J1 < J2. If so, then control is passed to a function block 992. Otherwise, control is passed to a function block 994. The function block 992 selects the compressive sensing (CS) coding method, sets CS_flag = 1, and passes control to a loop limit block 996. The loop limit block 996 ends the loop, and passes control to an end block 999. The function block 960 quantizes the transform coefficients, and passes control to a function block 965. The function block 965 entropy codes the quantized transform coefficients, and passes control to a function block 970. The function block 970 inverse quantizes the quantized transform coefficients, and passes control to a function block 975. The function block 975 applies an inverse discrete cosine transform (IDCT) to the quantized transform coefficients to obtain a reconstructed residue, and passes control to a function block 980. The function block 980 adds the reconstructed residue (obtained by function block 980) to the prediction (obtained by function block 915) to obtain a prediction compensated reconstructed block, and passes control to a function block 985. The function block 985 performs a rate-distortion computation to obtain a rate-distortion value J2, and passes control to the decision block 990.

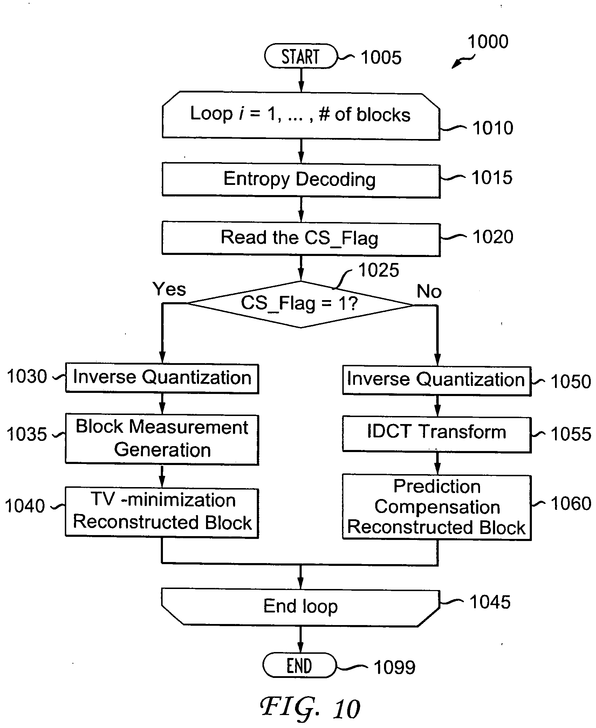

Turning to FIG. 10, an exemplary method for decoding image data for a picture is indicated generally by the reference numeral 1000. The method 1000 advantageously incorporates a novel compressive sensing mode and a novel block reconstruction in accordance with the present principles. The method 1000 includes a start block 1005 that passes control to a loop limit block 1010. The loop limit block 1010 begins a loop using a variable i having a range from 1, ..., number (#) of blocks, and passes control to a function block 1015. The function block 1015 entropy decodes a bitstream and obtains the quantized transform coefficients of the residue, the Intra/Inter prediction modes, etc., and passes control to a function block 1020. The function block 1020 reads CS_Flag, and passes control to a decision block 1025. The decision block 1025 determines whether or not CS_Flag = 1. If so, then control is passed to a function block 1030. Otherwise, control is passed to a function block 1050. The function block 1030 inverse quantizes the quantized transform coefficients to obtain the transform coefficients of the residue, and passes control to a function block 1035. The function block 1035 performs block measurement generation, for example using the method 700 in Figure 7, and passes control to a function block 1040. The function block 1040 obtains a TV-minimization reconstructed block by solving the optimization problem in Equation (8), and passes control to a loop limit 1045. The loop limit block 1045 ends the loop, and passes control to an end block 1099. The function block 1050 inverse quantizes the quantized transform coefficients of the residue to obtain the transform coefficients, and passes control to a function block 1055. The function block 1055 applies an inverse transform (e.g., a discrete cosine transform (DCT)) to the transform coefficients of the residue to reconstruct the residue, and passes control to a function block 1060. The function block 1060 obtains a prediction compensation reconstructed block by adding the reconstructed residue for the current block to the prediction for the current block, and passes control to the loop limit block 1045.

Our proposed approach to block reconstruction attempts to reconstruct a block in the image/pixel domain rather than to reconstruct the block residue as in the aforementioned first prior art approach. This comes from our observation that a natural image block is often more gradient sparse than its residue. Hence, solving the TV-minimization in the pixel domain would lead to a higher quality of signal reconstruction. In addition, we employ (i) a 2-D DCT transform (or integer MPEG-4 AVC Standard transform) rather than 1-D DCT in the previous approach and (ii) a different sampling pattern based on a zigzag scanning order (i.e., we sort the transform coefficients in a zigzag scanning order and then choose a subset using the first entries). Our goal is to capture a larger amount of block residue energy, given a constant number of coded coefficients. To reconstruct the signal, we employ a much faster and more efficient TV-minimization algorithm to speed up the block reconstruction. Additionally, we view block reconstruction as a de-noising process. Thus, to compensate for the quantization noise, we adjust the factor $\mu$ in Equation (7) adaptively with respect to the quantization step size or quantization parameters.

Based on rate-distortion (RD) optimization, the encoder decides to encode a block residue using the existing coding modes or the compressive sensing coding mode. For each block, a flag is sent to the decoder to indicate whether or not the encoder employs the compressive sensing mode. The decoder will read the CS-Flag to get information of the coding mode selected at the encoder and then execute the appropriate reconstruction algorithm.

A description will now be given of some of the many attendant advantages/features of the present invention, some of which have been mentioned above. For example, one advantage/feature is an apparatus having a video encoder for encoding an image block in a picture by generating a measurement vector for the image block, encoding the measurement vector, and reconstructing the image block by minimizing a signal sparsity of the image block responsive to the encoded measurement vector, the measurement vector including transform coefficients relating to the image block.

Another advantage/feature is the apparatus having the video encoder as described above, wherein the measurement vector is determined responsive to a residue determined for the image block, the residue representing a difference between an original version of the image block and a prediction for the image block.

Yet another advantage/feature is the apparatus having the video encoder, wherein the measurement vector is determined responsive to a residue determined for the image block, the residue representing a difference between an original version of the image block and a prediction for the image block as described above, wherein the measurement vector includes a subset of transform coefficients for the residue.

Still another advantage/feature is the apparatus having the video encoder as described above, wherein the measurement vector is encoded using quantization and entropy coding.

Moreover, another advantage/feature is the apparatus having the video encoder as described above, wherein the signal sparsity is determined in the image domain.

Further, another advantage/feature is the apparatus having the video encoder wherein the signal sparsity is determined in the image domain as described above, wherein the signal sparsity is measured by a total variation, the total variation being a function of a difference between consecutive pixels in the image block.

Also, another advantage/feature is the apparatus having the video encoder as described above, wherein the signal sparsity of the image block is minimized using a minimization function formulated as a weighted sum of the signal sparsity and a measurement error, the measurement error representing a difference between a reconstructed measurement and an estimated measurement for the image block.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. An apparatus, comprising:

   a video encoder (500) for encoding an image block in a picture by generating a measurement vector for the image block, encoding the measurement vector, and reconstructing the image block by minimizing a signal sparsity of the image block responsive to the encoded measurement vector, the signal sparsity being determined in the image domain, and the measurement vector including transform coefficients relating to the image block, **characterized in that** the signal sparsity of the image block is minimized using a minimization function formulated as a weighted sum of the signal sparsity and a measurement error through a weighting factor that is adaptive to a quantization parameter, the measurement error representing a difference between a reconstructed measurement and an estimated measurement for the image block.

2. A method for video encoding, comprising:

   encoding an image block in a picture by generating a measurement vector for the image block, encoding the measurement vector, and reconstructing the image block by minimizing a signal sparsity of the image block responsive to the encoded measurement vector, the signal sparsity being determined in the image domain, and the measurement vector including transform coefficients relating to the image block (900), **characterized in that** the signal sparsity of the image block is minimized using a minimization function formulated as a weighted sum of the signal sparsity and a measurement error through a weighting factor that is adaptive to a quantization parameter, the measurement error representing a difference between a reconstructed measurement and an estimated measurement for the image block.

3. The method of claim 2, wherein the measurement vector is determined responsive to a residue determined for the image block, the residue representing a difference between an original version of the image block and a prediction for the image block (730).

4. The method of claim 3, wherein the measurement vector includes a subset of transform coefficients for the residue (730).

5. The method of claim 2, wherein the measurement vector is encoded using quantization and entropy coding (930, 935).

6. The method of claim 2, wherein the signal sparsity is determined in the image domain (815).

7. The method of claim 6, wherein the signal sparsity is measured by a total variation, the total variation being a function of a difference between consecutive pixels in the image block (950).

8. The method of claim 2, where the method is implemented as a coding mode, and whether the coding mode is selected or not is signaled using a flag (992).

9. The method of claim 8, wherein the coding mode selection is based on rate distortion (990).

10. An apparatus, comprising:

    a video decoder (600) for decoding an image block for a picture by receiving a measurement vector for the image block, decoding the measurement vector, and reconstructing the image block by minimizing a signal sparsity of the image block responsive to the decoded measurement vector, wherein the signal sparsity is determined in the image domain, and the measurement vector includes transform coefficients relating to the image block, **characterized in that** the signal sparsity of the image block is minimized using a minimization function formulated as a weighted sum of the signal sparsity and a measurement error through a weighting factor that is adaptive to a quantization parameter, the measurement error representing a difference between a reconstructed measurement and an estimated measurement for the image block.

**11.** A method for video decoding, comprising:

decoding an image block for a picture by receiving a measurement vector for the image block, decoding the measurement vector, and reconstructing the image block by minimizing a signal sparsity of the image block responsive to the decoded measurement vector, wherein the signal sparsity is determined in the image domain, and the measurement vector includes transform coefficients relating to the image block (1000), **characterized in that** the signal sparsity of the image block is minimized using a minimization function formulated as a weighted sum of the signal sparsity and a measurement error through a weighting factor that is adaptive to a quantization parameter, the measurement error representing a difference between a reconstructed measurement and an estimated measurement for the image block.

**12.** The method of claim 11, wherein the measurement vector is determined responsive to a residue determined for the image block, the residue representing a difference between an original version of the image block and a prediction for the image block (730).

**13.** The method of claim 12, wherein the measurement vector includes a subset of transform coefficients for the residue (730).

**14.** The method of claim 11, wherein the measurement vector is encoded using quantization and entropy coding (930, 935).

**15.** The method of claim 11, wherein the signal sparsity is determined in the image domain (815).

**16.** A computer readable storage media having video signal data encoded thereupon, comprising:

an image block in a picture encoded by generating a measurement vector for the image block, encoding the measurement vector, and reconstructing the image block by minimizing a signal sparsity of the image block responsive to the encoded measurement vector, the signal sparsity being determined in the image domain, and the measurement vector including transform coefficients relating to the image block,
wherein the signal sparsity of the image block is minimized using a minimization function formulated as a weighted sum of the signal sparsity and a measurement error through a weighting factor that is adaptive to a quantization parameter, the measurement error representing a difference between a reconstructed measurement and an estimated measurement for the image block.

**Patentansprüche**

**1.** Vorrichtung, umfassend:

einen Videokodierer (500) zum Kodieren eines Bildblocks in einem Bild durch Erzeugen eines Messvektors für den Bildblock, Kodieren des Messvektors und Rekonstruieren des Bildblocks durch Minimieren einer Signaldichte des Bildblocks als Reaktion auf den kodierten Messvektor, wobei die Signaldichte im Bildbereich bestimmt wird, und der Messvektor umfassend Transformationskoeffizienten in Zusammenhang mit dem Bildblock, **gekennzeichnet dadurch, dass** die Signaldichte des Bildblocks unter Verwendung einer Minimierungsfunktion, die als eine gewichtete Summe der Signaldichte und einen Messfehler durch einen Gewichtungsfaktor, der an einen Quantisierungsparameter anpassbar ist, formuliert ist, minimiert wird, wobei der Messfehler eine Differenz zwischen einer rekonstruierten Messung und einer geschätzten Messung für den Bildblock darstellt.

**2.** Verfahren zur Videokodierung umfassend:

Kodieren eines Bildblocks in einem Bild durch Erzeugen eines Messvektors für den Bildblock, Kodieren des Messvektors und Rekonstruieren des Bildblocks durch Minimieren einer Signaldichte des Bildblocks als Reaktion auf den kodierten Messvektor, wobei die Signaldichte im Bildbereich festgelegt wird, und der Messvektor umfassend Transformationskoeffizienten in Zusammenhang mit dem Bildblock (900), **gekennzeichnet dadurch, dass** die Signaldichte des Bildblocks unter Verwendung einer Minimierungsfunktion, die als eine gewichtete Summe der Signaldichte und einen Messfehler durch einen Gewichtungsfaktor, der an einen Quantisierungsparameter anpassbar ist, formuliert ist, minimiert wird, wobei der Messfehler eine Differenz zwischen einer rekonstruierten Messung und einer geschätzten Messung für den Bildblock darstellt.

3. Verfahren nach Anspruch 2, wobei der Messvektor als Reaktion auf eine Restmenge bestimmt ist, die für den Bildblock bestimmt ist, wobei die Restmenge eine Differenz zwischen der ursprünglichen Ausführung des Bildblocks und einer Vorhersage für den Bildblock (730) darstellt.

4. Verfahren nach Anspruch 3, wobei der Messvektor eine Teilmenge der Transformationskoeffizienten für die Restmenge umfasst (730).

5. Verfahren nach Anspruch 2, wobei der Messvektor unter Verwendung von Quantisierung und Entropie-Kodierung (930, 935) kodiert wird.

6. Verfahren nach Anspruch 2, wobei die Signaldichte in dem Bildbereich (815) bestimmt wird.

7. Verfahren nach Anspruch 6, wobei die Signaldichte durch eine Gesamtabweichung gemessen wird, wobei die Gesamtabweichung eine Funktion einer Differenz zwischen aufeinanderfolgenden Pixeln in dem Bildblock(950) darstellt.

8. Verfahren nach Anspruch 2, wobei das Verfahren als Kodierungsmodus durchgeführt wird, und die Auswahl des Kodierungsmodus durch eine Kennzeichnung(992)angezeigt wird.

9. Verfahren nach Anspruch 8, wobei die Auswahl des Kodierungsmodus auf Ratenverzerrung (990) beruht.

10. Vorrichtung, umfassend:

Einen Videokodierer (600) zum Dekodieren eines Bildblocks für ein Bild durch Empfangen eines Messvektors für den Bildblock, Dekodieren des Messblocks und Rekonstruieren des Bildblocks durch Minimieren einer Signaldichte des Bildblocks als Reaktion auf den dekodierten Messvektor, wobei die Signaldichte im Bildbereich bestimmt wird und der Messvektor Transformationskoeffizienten umfasst, die im Zusammenhang mit dem Bildblock stehen, **dadurch gekennzeichnet, dass** die Signaldichte des Bildblocks unter Verwendung einer Minimierungsfunktion, die als eine gewichtete Summe der Signaldichte und einen Messfehler durch einen Gewichtungsfaktor, der an einen Quantisierungsparameter anpassbar ist, formuliert ist, minimiert wird, wobei der Messfehler eine Differenz zwischen einer rekonstruierten Messung und einer geschätzten Messung für den Bildblock darstellt.

11. Verfahren zur Videodekodierung, umfassend:

Dekodieren eines Bildblocks für ein Bild durch Empfangen eines Messvektors für den Bildblock, Dekodieren des Bildvektors und Rekonstruieren des Bildblocks durch Minimieren einer Signaldichte des Bildblocks als Reaktion auf den dekodierten Messvektor, wobei die Signaldichte im Bildbereich bestimmt ist und der Messvektor Transformationskoeffizienten im Zusammenhang mit dem Bildblock (1000) umfasst, **dadurch gekennzeichnet, dass** die Signaldichte des Bildblocks unter Verwendung einer Minimierungsfunktion, die als eine gewichtete Summe der Signaldichte und einen Messfehler durch einen Gewichtungsfaktor, der an einen Quantisierungsparameter anpassbar ist, formuliert ist, minimiert wird, wobei der Messfehler eine Differenz zwischen einer rekonstruierten Messung und einer geschätzten Messung für den Bildblock darstellt.

12. Verfahren nach Anspruch 11, wobei der Messvektor als Reaktion auf eine Restmenge bestimmt ist, die für den Bildblock festgelegt ist, wobei die Restmenge eine Differenz zwischen einer ursprünglichen Ausführung des Bildblocks und einer Vorhersage für den Bildblock (730) darstellt.

13. Verfahren nach Anspruch 12, wobei der Messvektor eine Teilmenge von Transformationskoeffizienten für die Restmenge (730) umfasst.

14. Verfahren nach Anspruch 11, wobei der Messvektor unter Verwendung von Quantisierung und Entropiekodierung (930, 935) kodiert wird.

15. Verfahren nach Anspruch 11, wobei die Signaldichte im Bildbereich (815) bestimmt wird.

16. Computerlesbares Speichermedium mit darauf kodierten Videosignaldaten, umfassend:

einen Bildblock in einem Bild, das durch Erzeugen eines Messvektors für den Bildblock kodiert wird, der den Messvektor kodiert und den Bildblock durch Minimieren einer Signaldichte des Bildblocks als Reaktion auf den kodierten Messvektor rekonstruiert, wobei die Signaldichte im Bildbereich bestimmt ist, und der Messfaktor Transformationskoeffizienten im Zusammenhang mit dem Bildblock umfasst, wobei die Signaldichte des Bildblocks unter Verwendung einer Minimierungsfunktion, die als eine gewichtete Summe der Signaldichte und einen Messfehler durch einen Gewichtungsfaktor, der an einen Quantisierungsparameter anpassbar ist, formuliert ist, minimiert wird, wobei der Messfehler eine Differenz zwischen einer rekonstruierten Messung und einer geschätzten Messung für den Bildblock darstellt.

## Revendications

1. Appareil comprenant :

   un codeur vidéo (500) pour coder un bloc d'images dans une image en générant un vecteur de mesure pour le bloc d'images, en codant le vecteur de mesure et en reconstruisant le bloc d'images en minimisant l'éparpillement du signal du bloc d'images en réponse au vecteur de mesure codé, l'éparpillement du signal étant déterminé dans le domaine d'image, et le vecteur de mesure incluant des coefficients de transformation associés au bloc d'images,
   **caractérisé en ce que**
   l'éparpillement du signal du bloc d'images est minimisé à l'aide d'une fonction de minimisation formulée comme une somme pondérée de l'éparpillement du signal et d'une erreur de mesure via un facteur de pondération qui s'adapte à un paramètre de quantification, l'erreur de mesure représentant une différence entre une mesure reconstruite et une mesure estimée du bloc d'images.

2. Procédé de codage vidéo comprenant :

   le codage d'un bloc d'images dans une image en générant un vecteur de mesure pour le bloc d'images, en codant le vecteur de mesure et en reconstruisant le bloc d'images en minimisant l'éparpillement du signal du bloc d'images en réponse au vecteur de mesure codé, l'éparpillement du signal étant déterminé dans le domaine d'image, et le vecteur de mesure incluant des coefficients de transformation associés au bloc d'images (900),
   **caractérisé en ce que**
   l'éparpillement du signal du bloc d'images est minimisé à l'aide d'une fonction de minimisation formulée comme une somme pondérée de l'éparpillement du signal et d'une erreur de mesure via un facteur de pondération qui s'adapte à un paramètre de quantification, l'erreur de mesure représentant une différence entre une mesure reconstruite et une mesure estimée du bloc d'images.

3. Procédé selon la revendication 2, dans lequel le vecteur de mesure est déterminé en réponse à un résidu déterminé pour le bloc d'images, le résidu représentant une différence entre une version originale du bloc d'images et une prédiction du bloc d'images (730).

4. Procédé selon la revendication 3, dans lequel le vecteur de mesure inclut un sous-ensemble de coefficients de transformation pour le résidu (730).

5. Procédé selon la revendication 2, dans lequel le vecteur de mesure est codé à l'aide de la quantification et du codage entropique (930, 935)

6. Procédé selon la revendication 2, dans lequel l'éparpillement du signal est déterminé dans le domaine d'image (815).

7. Procédé selon la revendication 6, dans lequel l'éparpillement du signal est mesuré par une variation totale, la variation totale étant une fonction d'une différence entre des pixels consécutifs dans le bloc d'images (950).

8. Procédé selon la revendication 2, dans lequel le procédé est implémenté sous forme de mode de codage et dans lequel la sélection ou non du mode de codage est signalée à l'aide d'un indicateur (992).

9. Procédé selon la revendication 8, dans lequel la sélection du mode de codage est basée sur la distorsion du débit (990).

14

**10.** Appareil comprenant :

un décodeur vidéo (600) pour décoder un bloc d'images pour une image en recevant un vecteur de mesure pour le bloc d'images, en décodant le vecteur de mesure et en reconstruisant le bloc d'images en minimisant l'éparpillement du signal en réponse au vecteur de mesure décodé, dans lequel l'éparpillement du signal est déterminé dans le domaine d'image, et le vecteur de mesure inclut des coefficients de transformation associés au bloc d'images,

**caractérisé en ce que**

l'éparpillement du signal du bloc d'images est minimisé à l'aide d'une fonction de minimisation formulée comme une somme pondérée de l'éparpillement du signal et d'une erreur de mesure via un facteur de pondération qui s'adapte à un paramètre de quantification, l'erreur de mesure représentant une différence entre une mesure reconstruite et une mesure estimée du bloc d'images.

**11.** Procédé de décodage vidéo, comprenant :

le décodage d'un bloc d'images pour une image en recevant un vecteur de mesure pour le bloc d'images, en décodant le vecteur de mesure et en reconstruisant le bloc d'images en minimisant l'éparpillement du signal en réponse au vecteur de mesure décodé, dans lequel l'éparpillement du signal est déterminé dans le domaine d'image, et le vecteur de mesure inclut des coefficients de transformation associés au bloc d'images (1000),

**caractérisé en ce que**

l'éparpillement du signal du bloc d'images est minimisé à l'aide d'une fonction de minimisation formulée comme une somme pondérée de l'éparpillement du signal et d'une erreur de mesure via un facteur de pondération qui s'adapte à un paramètre de quantification, l'erreur de mesure représentant une différence entre une mesure reconstruite et une mesure estimée du bloc d'images.

**12.** Procédé selon la revendication 11, dans lequel le vecteur de mesure est déterminé en réponse à un résidu déterminé pour le bloc d'images, le résidu représentant une différence entre une version originale du bloc d'images et une prédiction du bloc d'images (730).

**13.** Procédé selon la revendication 12, dans lequel le vecteur de mesure inclut un sous-ensemble de coefficients de transformation pour le résidu (730).

**14.** Procédé selon la revendication 11, dans lequel le vecteur de mesure est codé à l'aide de la quantification et du codage entropique (930, 935)

**15.** Procédé selon la revendication 11, dans lequel l'éparpillement du signal est déterminé dans le domaine d'image (815).

**16.** Support de stockage lisible par ordinateur incluant des données de signal vidéo codées dessus comprenant :

un bloc d'images dans une image codée en générant un vecteur de mesure pour le bloc d'images, en codant le vecteur de mesure, et

et en reconstruisant le bloc d'images en minimisant l'éparpillement du signal du bloc d'images en réponse au vecteur de mesure codé, l'éparpillement du signal étant déterminé dans le domaine d'image,

et le vecteur de mesure incluant des coefficients de transformation associés au bloc d'images,

dans lequel l'éparpillement du signal du bloc d'images est minimisé à l'aide d'une fonction de minimisation formulée comme une somme pondérée de l'éparpillement du signal et d'une erreur de mesure via un facteur de pondération qui s'adapte à un paramètre de quantification, l'erreur de mesure représentant une différence entre une mesure reconstruite et une mesure estimée du bloc d'images.

100

X $\quad\psi\quad$ $\alpha$

=

■ NONZERO AND SIGNIFICANT ENTRIES

⊠ ZERO OR INSIGNIFICANT ENTRIES

*FIG. 1*

200

y $\quad\phi\quad$ x

=

*FIG. 2*

300

START —310

Loop i = 1, ..., # of blocks —320

Intra/Inter Prediction —330

DCT Transform —340

Quantization —350

Entropy Coding —360

Inverse Quantization —370

IDCT Transform —380

Reconstruct Block —390

End loop —395

END —399

FIG. 3

START — 410

400

Loop *i* = 1, ..., # of blocks — 420

Entropy Decoding — 430

Inverse Quantization — 440

IDCT Transform — 450

Reconstruct Block — 460

End loop — 470

END — 499

*FIG. 4*

FIG. 5

**FIG. 6**

EP 2 524 506 B1

*700*

START — 710

Generate measurement vector of predicted block, the measurement vector being a subset of transform coefficients of predicted block — 720

Add measurement vector of predicted block to (dequantized) measurement vector of block residue to yield measurement vector of a reconstructed block, the measurement vector of block residue being a subset of transform coefficients of block residue — 730

Minimize the objective function with the measurement vector of the reconstructed block — 740

END — 799

*FIG. 7*

800

START — 810

Formulate a minimization function as weighted sum of the signal sparsity and a measurement error through a weighting factor μ, the measurement error representing the difference between a reconstructed measurement and an estimated measurement, the signal sparsity being determined in the image domain — 815

Set μ to be adaptive to quantization parameter — 820

Minimize the objective function with adaptive μ — 830

END — 899

*FIG. 8*

FIG. 9

START — 1005

1000

Loop $i$ = 1, ... , # of blocks — 1010

Entropy Decoding — 1015

Read the CS_Flag — 1020

1025

Yes ◇ CS_Flag = 1? No

1030 — Inverse Quantization

1050 — Inverse Quantization

1035 — Block Measurement Generation

1055 — IDCT Transform

1040 — TV -minimization Reconstructed Block

1060 — Prediction Compensation Reconstructed Block

End loop — 1045

END — 1099

*FIG. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61295258 A

- EP 2046045 A1

**Non-patent literature cited in the description**

- Wavelet-based compressive Super-Resolution. APPLICATONS OF COMPUTER VISION (WACV), 2009 WORKSHOP ON. IEEE, 07 December 2009, 1-6